# EUROPEAN PATENT APPLICATION

(11) **EP 1 850 202 A1**
(43) Date of publication of application: **31.10.2007**
(21) Application number: 07006509.9
(22) Date of filing: 29.03.2007
(51) Int. Cl.: G05D 23/13

(54) **Intelligent water saving management system**

(30) Priority: 03.04.2006 ES 200600856
(71) Applicant: Griferías Grober S.L., 50410 Cuarte de Huerva Zaragoza (ES)
(72) Inventor: Ladrón Jiménez, Roberto, 50410 Cuarte de Huerva (Zarogoza) (ES)
(74) Representative: Schäfer, Matthias W.

(57) **Abstract**

Intelligent water saving management system, applicable to taps in general, either conventional ones or with electronic control, and to shower devices both in dwellings and for community use, wherein once it is detected that the shower tap (2) has been turned on, the electronic control (3,6) records the temperature of the hot water that reaches the tap.

If said temperature is below the selected or pre-set comfort temperature, the water will not come out the tap but rather it will flow into a pressure reboiler-type tank (4) for its subsequent discharge and reuse.

The hot water will begin to come out of the tap when the temperature reaches the pre-set threshold. The cold water in the reboiler will flow into the circuit to be mixed with the hot water.

The chief advantage of the invention is that it saves water since the water is not wasted but rather, once it has accumulated, it is integrated into the general circuit again.

## Description

As indicated in the title, the present description refers to an intelligent water saving management system applicable to taps in general, either conventional ones or with electronic control, and to shower devices in both in dwellings and for community use, wherein upon detecting that the tap has been turned on, when the user starts to shower, an electronic control records the temperature of the hot water reaching the tap.

If the water temperature is lower than that selected by the user or below the pre-set comfort temperature, the water will not come out but rather it will flow through a return circuit to a pressure reboiler-type tank, for its subsequent discharge and reuse.

The hot water will not come out of the tap until its temperature reaches the pre-set threshold or user-selected temperature. At the same time the return of the cold water accumulated in the pressure reboiler is activated and it is returned to the general cold water pipe.

The return pipe controls the entry of the water returned from the pressure reboiler by means of a one-way valve which, when it lets the water pass, closes an electrovalve that regulates the flow of the general cold water pipe, allowing the water in the reboiler to be totally discharged; said water flows into the general pipe and mixes with the hot water to maintain the selected shower temperature, taking into account the considerable saving of water generated by the system as the water is not wasted but rather it is accumulated in a pressure reboiler in order to be used again by integrating it into the general circuit through a return circuit.

When the pressure reboiler has discharged its volume of cold water, the electrovalve automatically allows the cold water to flow through the general pipe in the direction of the tap, and closes the flow of the one-way valve.
In general, any type of mixer or thermostatic tap or shower column incorporating either of these devices along with different types of hydromassage devices, jets, etc., have a common problem which is that until the water reaches a comfortable temperature for the user and said user begins to shower, many litres of water are literally poured down the plughole.
In the specific case of thermostatic or electronic taps and in the solutions that have been adopted to date, the system automatically lets the hot water pass, blocking the passage of the cold water until the hot water reaches the temperature pre-set by the user; at that moment, once said temperature has been reached, the system gradually allows the cold water through in order to maintain a constant temperature when the hot water coming from the mains continues to rise above the temperature required by the user.
Whilst the process of obtaining an ideal water mix is taking place, a volume of water of between 5 and 12 litres has probably been poured away, without any use being made of it. This represents a large amount of water bearing in mind that, if this operation is carried out on a daily basis and by all the members of a typical 4-member family, daily consumption may well approach a volume of nearly 25 litres.
To provide a solution to today's serious water consumption problems an intelligent management system for saving water, that is applicable to taps in general, has been conceived. The explanatory example used is that of a coiumn shower device of the type that includes water control and water flow in an element that is placed on the wall but which is applicable to other formats such as embeddable taps, outdoor taps, etc. in which the elements that form it are either concealed or visible.

Firstly, the shower column includes a return system formed by a pressure reboiler, with its corresponding pipes for subsequent discharge and reuse.

It may include all types of improvements obtained by incorporating electronic controls in the taps, such as starting and operating leds, temperature controls, switch-on, switch-off timers, etc.

The intelligent water saving management system is activated when the user decides to take a shower and turns on the thermostatic tap. Upon detecting that the tap has been turned on, a sensor records the temperature of the hot water reaching it.

If the temperature is below that required by the user or is below the pre-set comfort temperature, the temperature sensor will order the flow and conduction of the water to a pressure reboiler, controlled by an electrovalve.

The water accumulates in the pressure reboiler until the hot water temperature reaches the degree required by the user; it is only when the temperature of the hot water reaches the ideal temperature and the temperature sensor indicates this that the electronic control will order the electrovalve to close, allowing cold water to pass and allowing the passage of hot water at the ideal temperature, by means of another electrovalve which will directly discharge the water to the shower or handheld shower.

As soon as the normal flow of the hot water has been regulated, the electronic control activates the pressure reboiler causing the accumulated water to leave it and to flow through a return circuit to the general cold water pipe where it is once again integrated into the circuit for its reuse by means of a one-way valve that lets it flow until the reboiler is totally empty.

When the pressure reboiler has totally discharged the accumulated water, the one-way valve will automatically and simultaneously close and the electrovalve for the general cold water pipe will open, once again establishing normal water flow.

The intelligent water saving management system presented offers the essential advantage over other known means of providing important savings in water consumption, which is of vital importance considering the current periods of drought, since the water is not wasted but rather it is accumulated in a pressure reboiler to be subsequently integrated into the general installation for its reuse.

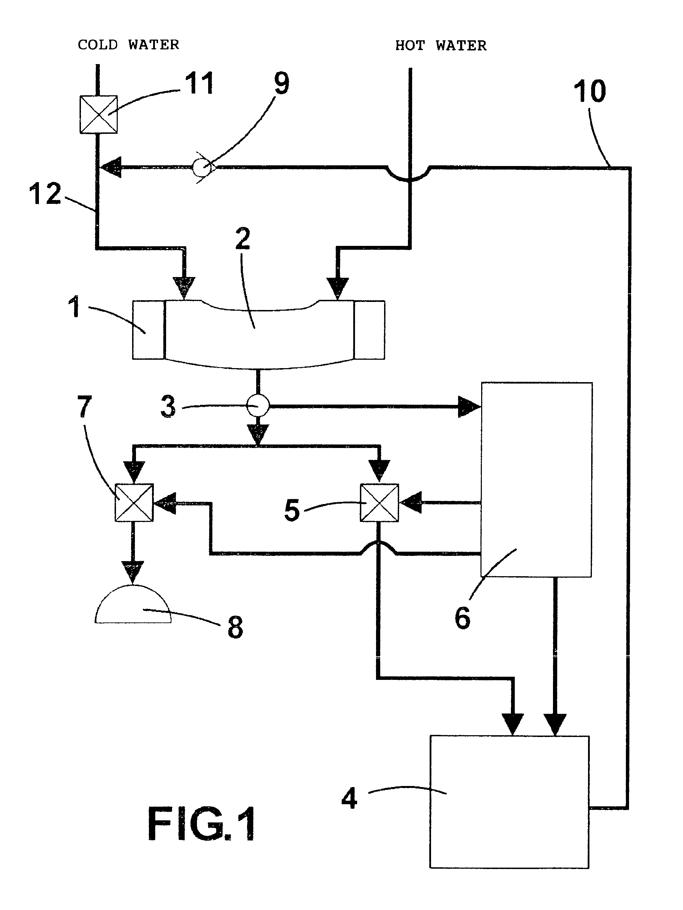

To gain a better understanding of the object of the present invention, a preferred practical embodiment is shown in the attached drawing. In said drawing:
Figure -1- shows a diagram of an intelligent water saving management system.

The system is activated when the handle (1) of a tap (2) is turned and, when it is detected that the tap has been turned on, a temperature sensor (3) records the temperature of he hot water reaching it.

If the water is below the temperature required by the user or the pre-set comfort temperature, the temperature sensor (3), will order the water to be taken to a pressure reboiler (4), under the control of an electrovalve (5).

The water gradually accumulates in the pressure reboiler (4) until the hot water temperature reaches the degrees required by the user. Only when the hot water reaches the ideal temperature and the temperature sensor (3) indicates this, will the electronic control (6) order the closure of the electrovalve (5) which lets the cold water pass, allowing the passage of the hot water by means of another electrovalve (7), which directly discharges the water to the shower or handheld shower (8).

As soon as the normal functioning of the hot water flow has been regulated to the ideal temperature, the electronic control (6) activates the pressure reboiler (4) causing the water accumulated to come out and to flow through a return pipe (10) to the general cold water pipe (11), where it is once again integrated into the circuit for its reuse through a one-way valve (9) that allows it to flow until the pressure reboiler (4) has been totally emptied.

When the pressure reboiler (4) has completely discharged the accumulated water, the one-way valve (9) automatically and simultaneously closes and the electrovalve (11) of the general cold water pipe (12) opens, once again re-establishing the normal flow of water.

## Claims

1. Intelligent water saving management system, applicable to taps in general, either conventional ones or with electronic control and to shower devices both in dwellings and for community use, **wherein** when the handle (1) of a thermostatic tap (2) is turned, a temperature sensor (3) records the temperature of the hot water that reaches it. In the event that the temperature is not the required or pre-set comfort temperature, said temperature sensor (3) will order the passage and conducting of the cold water to a pressure reboiler (4), under the control of an electrovalve (5).

2. Intelligent water saving management system, according to the preceding claim, **wherein** the cold water gradually accumulates in the pressure reboiler (4) until the hot water temperature reaches the degrees required by the user, and only when the hot water reaches the ideal temperature and the temperature sensor (3) indicates this, will the electronic control (6) order the closure of the electrovalve (5) that lets the cold water pass, allowing the passage of hot water by another electrovalve (7) which directly discharges the water to the shower or the handheld shower (8).

3. Intelligent water saving management system, according to the preceding claims, **wherein** when the normal functioning of the flow of hot water to the shower (8) has been regulated, the electronic control (6) activates the pressure reboiler (4) causing the water accumulated to come out and to flow through a return pipe (10), by means of a one-way valve (9), to the general cold water pipe (12) where it is once again integrated into the circuit for its reuse.

4. Intelligent water saving management system, according to the preceding claims, **wherein,** when the pressure reboiler (4) has totally discharged the water accumulated, the one-way valve (9) automatically and simultaneously closes and the electrovalve (11) of the general cold water pipe (12) opens, re-establishing the normal water flow again.
